(19) Europäisches Patentamt
European Patent Office
Office européen des brevets

(11) Veröffentlichungsnummer: **0 132 651 B1**

(12) # EUROPÄISCHE PATENTSCHRIFT

(45) Veröffentlichungstag der Patentschrift: **19.06.91**

(51) Int. Cl.5: **C07F 7/18**, A01N 55/00

(21) Anmeldenummer: **84107856.1**

(22) Anmeldetag: **05.07.84**

(54) **Verwendung cyclischer Phenolorganosilanester.**

(30) Priorität: **02.08.83 DE 3327795**

(43) Veröffentlichungstag der Anmeldung:
**13.02.85 Patentblatt 85/07**

(45) Bekanntmachung des Hinweises auf die Patenterteilung:
**19.06.91 Patentblatt 91/25**

(84) Benannte Vertragsstaaten:
**BE DE FR GB IT NL**

(56) Entgegenhaltungen:
**FR-A- 1 387 338**
**FR-A- 2 110 241**

**CHEMICAL ABSTRACTS, Band 77, Nr. 2, 10. Juli 1972, Seite 126, Nr. 7381y, Columbus, Ohio, US; P.I. ZUBOV et al.: "Effect of the nature and distribution of adhesive bonds at the polymer-substrate interface on the physicomechanical properties of coatings" & VYSOKOMOL SOEDIN., SER. B 1972, 14(2), 103-6**

(73) Patentinhaber: **HÜLS AKTIENGESELLSCHAFT**
**Paul-Baumann-Strasse 1**
**W-4370 Marl 1(DE)**

(72) Erfinder: **Kötzsch, Hans-Joachim, Dr.**
**Fecampring 28**
**W-7888 Rheinfelden(DE)**
Erfinder: **Vahlensieck, Hans-Joachim, Dr.**
**Im Habiken 2**
**W-7867 Wehr(DE)**

**EP 0 132 651 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

CHEMICAL ABSTRACTS, Band 71, no. 13, 29. September 1969, Seite 472, Nr. 61458t, Columbus, Ohio, US; V.F. MIRONOV et al.: "Synthesis of 1-oxa-2-silacycloalkanes from dimethylsilyl ethers of unsaturated alcohols" & ZH. OBSHCH. KHIM. 1969, 39(5), 966-70

CHEMICAL ABSTRACTS, Band 75, Nr. 13, 27. September 1971, Seite 374, Nr. 88680d, Columbus, Ohio, US; V.F. MORONOV et al.: "Hydrosilylation of alkenehydroxydiorganosilanes" & ZH. OBSHCH. KHIM. 1971, 41(5), 1077-81

CHEMICAL ABSTRACTS, Band 58, Nr. 9, 29. April 1963, Nr. 9112f, Columbus, Ohio, US; K.A. ANDRIANOV et al.: "Reactions of allylphenol and trimethylsiloxyallylbenzene with alkylalkoxysilane hydrides" & IZV. AKAD. NAUK SSSR, OTD. KHIM. NAUK 1962, 2039-46

TETRAHEDRON LETTERS, Nr. 34, 1979, Seiten 3153-3156, Pergamon Press Ltd., Oxford, GB; J. ANCELLE et al.: "Claisen rearrangement in the silicon series"

TETRAHEDRON, Band 37, Nr. 14, 1981, Seiten 2459-2466, Pergamon Press Ltd., Oxford, GB; G. BERTRAND et al.: "Le réarrangement de claisen en séries siliciée et germaniée: silaethylène et germaéthylène"

CHEMICAL ABSTRACTS, Band 82, Nr. 10, 10. März 1975, Seite 6, Nr. 58194a, Columbus, Ohio, US; G.D. KHATUNTSEV et al.: "Synthesis of organosilicon chloroformates by the phosgenation of compounds with silicon-oxygen-carbon bonds" & ZH. OBSHCH. KHIM. 1974, 44(10), 2150-5

VYSOKOMOL SOEDIN, Ser. B 1972, 14(2), 103-106

CHEMICAL ABSTRACTS, 9th Collective Index, Seite 7228 CS

Noll: Chemie + Technologie der Silicone,Seite 78, Verlag Chemie, Weinheim

## Beschreibung

Gegenstand der Erfindung ist die Verwendung von cyclischen Phenolorganosilanestern der allgemeinen Formel

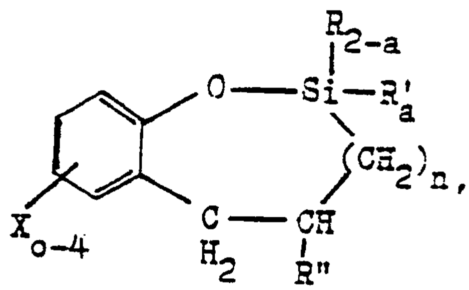

in der X für Halogen- und/oder gegebenenfalls fluorierte Alkylreste mit 1 bis 4 Kohlenstoffatomen, R' für Halogen- oder Alkoxyreste mit 1 bis 4 C-Atomen, R für gleiche oder verschiedene Alkylreste mit 1 bis 4 Kohlenstoffatomen und R" für $CH_3$, wenn n = 0 oder für H, wenn n = 1 ist, steht und a = 0 oder 1 oder 2 bedeutet, als Mittel gegen biologischen Angriff und/oder biologische Verseuchung und/oder biologischen Besatz, verursacht durch Pilze, Bakterien, Viren, Kleinpflanzen, Insekten und andere Schadorganismen, gegebenenfalls in Kombination mit Aminen und/oder Aminoorganosiliciumverbindungen.

In der DE-PS 22 37 961 sind Chlorphenoxysilane beschrieben, die eine bioresistente Wirkung besitzen und diese auch noch nach Einarbeitung in Kunststoffe beibehalten. Nachteilig bei diesen Verbindungen ist der für die Praxis zu hohe Dampfdruck dieser Verbindungen, der teilweise über den zulässigen MAK-Werten liegt.

In der FR-A-1 387 338 sind cyclische Phenolorganosilanester der vorstehend genannten allgemeinen Formel beschrieben. Gemäß dieser Schrift dienen die Verbindungen als Weichmacher in Phenolharzlacken und Überzugsharzen, als Appreturmittel auf Silikatmaterial wie Glas, Glasgewebe usw., als Bestandteil in Formmassen, Schichtstoffen (aus Phenolharz oder Polyester) und Plastisolen, als Sandverfestigungsmittel, Vulkanisationsmittel und Beschleuniger in Epoxiharzen.

Es bestand deshalb die Aufgabe, Phenolorganosilanverbindungen aufzufinden, die eine bioresistente Wirkung zeigen und einen möglichst geringen Dampfdruck aufweisen. Außerdem sollen die gesuchten Verbindungen maximal vier Chloratome am Phenolring besitzen und nach Möglichkeit die gewünschten Eigenschaften schon aufweisen, wenn der aromatische Ring nur mit zwei oder drei Chloratomen substituiert ist.

Es wurde gefunden, daß die Verbindungen der obengenannten allgemeinen Formel, besonders wenn sie im phenolischen Kern Substituenten tragen, zum Teil sehr umfassende oder je nach Substitution auch abgestufte Wirksamkeiten beispielsweise gegen grampositive und gramnegative Bakterien und Sproßpilze und abweisende Wirkungen gegen Pflanzenbewuchs und Insektenfraß zeigen.

Die beanspruchte Verwendung umfaßt die konservierende und/oder sterilisierende und/oder bioresistente Ausrüstung von Werkstoffen, z. B. die Textil-, Papier- und Holzkonservierung, die Sterilausrüstung von Keramikoberflächen, die Insektenfraß abweisende Ausrüstung von natürlichen Werkstoffen, Kunststoffen und insbesondere Elektroisoliermaterialien, die Antisize-Ausrüstung von Schiffen und Wasserbauten etc. Besonders vorteilhaft ist die Haftfestigkeit, die diese Phenolorganosilane mit Hilfe ihrer Silan-Komponente entwickeln. Die Silan-Komponente fixiert die Phenol-Komponente durch ihre an sich bekannte Haftmitteleigenschaft. Auf diese Weise werden länger anhaltende Wirkungen im Sinne der beanspruchten Verwendung erzielt. Die Haftung läßt sich erfindungsgemäß noch verstärken durch Vermischung der Phenolorganosilane bei der Anwendung mit Aminoorganosilanen, beispielsweise mit 3-Aminopropyltriethoxysilan oder 3-N,N-Dimethylaminopropyltrimethoxysilan. Gleichzeitig wird durch diese Maßnahme erfindungsgemäß noch eine bemerkenswerte Erhöhung der Wirksamkeit gegen Sproßpilze und Algen erzielt.

Diese weitere Verstärkung der Wirksamkeit der Phenolorganosilane gegen Sproßpilze und Algen wird erfindungsgemäß auch durch ihre Kombination mit Aminen, z. B. mit Abietinamin, erzielt.

Beispiele von Verbindungen, die erfindungsgemäß verwendet werden können, sind

1-Oxa-2-sila-2,2-dialkoxy-6,7-benzo-cycloheptan und 1-Oxa-2-sila-2,2-dialkoxy-3-methyl-5,6-benzo-cyclohexan,

1-Oxa-2-sila-2-isobutyl-2-alkoxy-6,7-benzo-cycloheptan und 1-Oxa-2-sila-2-isobutyl-2-alkoxy-3-methyl-5,6-benzo-cyclohexan,

1-Oxa-2-sila-2,2-dimethyl-6,7-(4-chlor-3,5-dimethylbenzo)-cycloheptan und 1-Oxa-2-sila-2,2,3-trimethyl-5,6-(4-chlor-3,5-dimethylbenzo)-cyclohexan,
1-Oxa-2-sila-2,2-dialkoxy-6,7-(4-chlor-3,5-dimethylbenzo)-cycloheptan und 1-Oxa-2-sila-2,2-dialkoxy-3-methyl-5,6-(4-chlor-3,5-dimethylbenzo)-cyclohexan,
1-Oxa-2-sila-2,2-dimethyl-6,7-(4-chlor-5-methylbenzo)-cycloheptan und 1-Oxa-2-sila-2,2,3-trimethyl-5,6-(4-chlor-5-methylbenzo)-cyclohexan,
1-Oxa-2-sila-2-alkoxy-2-methyl-6,7-(4-chlor-5-methylbenzo)-cycloheptan und 1-Oxa-2-sila-2-alkoxy-2-methyl-5,6-(4-chlor-5-methylbenzo)-cyclohexan,
1-Oxa-2-sila-2,2-dialkoxy-6,7-(3-methyl-4-chlorbenzo)-cycloheptan und 1-Oxa-2-sila-2,2-dialkoxy-3-methyl-5,6-(3-methyl-4-chlorbenzo)-cyclohexan,
1-Oxa-2-sila-2-alkoxy-2-methyl-6,7-(4,6-dichlor-5-methylbenzo)-cycloheptan und 1-Oxa-2-sila-2-alkoxy-2,3-dimethyl-5,6-(4,6-dichlor-5-methylbenzo)-cyclohexan,
1-Oxa-2-sila-2,2-dialkoxy-6,7-(3-methyl-4,6-dichlorbenzo)-cycloheptan und 1-Oxa-2-sila-2,2-dialkoxy-3-methyl-5,6-(3-methyl-4,6-dichlorbenzo)-cyclohexan,
1-Oxa-2-sila-2,2-dimethyl-6,7-(3,5-dimethyl-4,6-dichlorbenzo)-cycloheptan und 1-Oxa-2-sila-2,2,3-trimethyl-5,6-(3,5-dimethyl-4,6-dichlorbenzo)-cyclohexan,
1-Oxa-2-sila-2-methyl-2-alkoxy-6,7-(4-isopropylbenzo)-cycloheptan und das korrespondierende -5,6-(4-isopropylbenzo)-3-methyl-cyclohexan,
1-Oxa-2-sila-2,2-dialkoxy-6,7-(5-trifluormethylbenzo)-cycloheptan und das korrespondierende -5,6-(5-trifluormethylbenzo)-3-methyl-cyclohexan, die entsprechenden -2-Methyl-2-alkoxy- und -2,3-dimethyl-2-alkoxy-Derivate und die entsprechenden -2,2-dimethyl- und -2,2,3-trimethyl-Derivate,
1-Oxa-2-sila-2,2-dialkoxy-6,7-(4-chlorbenzo)-cycloheptan und das korrespondierende -5,6-(4-chlorbenzo)-3-methyl-cyclohexan,
1-Oxa-2-sila-2-methyl-2-alkoxy-6,7-(4,6-dichlorbenzo)-cycloheptan und 1-Oxa-2-sila-2,3-dimethyl-2-alkoxy-5,6-(4,6-dichlorbenzo)-cyclohexan,
1-Oxa-2-sila-2,2-dialkoxy-6,7-(3,4,6-trichlorbenzo)-cycloheptan und 1-Oxa-2-sila-2,2-dialkoxy-3-methyl-5,6-(3,4,6-trichlorbenzo)-cyclohexan, die entsprechenden -2-methyl-2-alkoxy- und -2,3-dimethyl-2-alkoxy-Derivate und die -2,2-dimethyl- und -2,2,3-trimethyl-Derivate,
1-Oxa-2-sila-2,2-dialkoxy-6,7-(3,4,5,6-tetrachlorbenzo)-cycloheptan und 1-Oxa-2-sila-2,2-dialkoxy-3-methyl-5,6-(3,4,5,6-tetrachlorbenzo)-cyclohexan, die entsprechenden -2-methyl-2-alkoxy- und 2,3-dimethyl-2-alkoxy-Derivate und die -2,2-dimethyl- und -2,2,3-trimethyl-Derivate.

Folgende Beispiele erläutern die Erfindung, ohne sie jedoch zu begrenzen:

Beispiele 1 bis 14

Hemmkonzentrationen der erfindungsgemäß verwendeten Wirkstoffe gegenüber Sproßpilzen (z. B. Candida albicans und Aspergillus niger) und gegenüber grampositiven (z. B. Staphylococcus aureus) und gramnegativen Bakterien (z. B. Escherichia coli, Proteus mirabilis, Pseudomonas aeruginosa).

Auf Pilz- und Bakterien-Kulturen wurden die Mindestkonzentrationen der gelösten Wirkstoffe bestimmt, die erforderlich sind, um Bakterien oder Pilze abzutöten. Die Tabellen I und II verzeichnen die Meßergebnisse.

**TABELLE I :** Hemmkonzentrationen in % gegenüber Testorganismen in 50% wäßriger Aceton-Lösung

| Beispiel Nr. | Testsubstanz | Sproßpilze | | Bakterien | | | |
|---|---|---|---|---|---|---|---|
| | | Candida albicans | Aspergillus niger | Staphylococcus aureus | Escherichia coli | Proteus mirabilis | Pseudomonas aeruginosa |
| 1 | 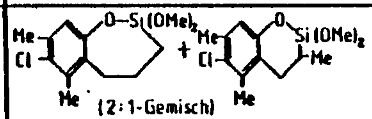 + (2:1-Gemisch) | 0.06-0.012 | 0.06-0.012 | 0.06-0.012 | 0.06-0.012 | 0.06-0.012 | 0.06-0.012 |
| 2 | 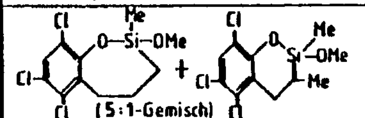 + (5:1-Gemisch) | 0.06-0.012 | 0.06-0.012 | 0.06-0.012 | 0.06-0.012 | 0.06-0.012 | 0.06-0.012 |
| 3 | 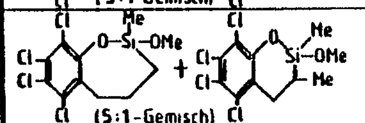 + (5:1-Gemisch) | 0.06-0.012 | 0.06-0.012 | 0.06-0.012 | 0.06-0.012 | 0.06-0.012 | 0.06-0.012 |
| 4 | 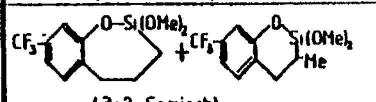 + (3:2-Gemisch) | 0.03-0.06 | 0.03-0.06 | 0.03-0.06 | 0.03-0.06 | 0.03-0.06 | 0.03-0.06 |
| 5 | 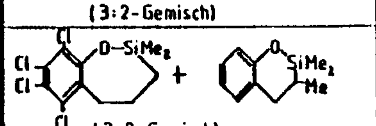 + (3:2-Gemisch) | 0.06-0.012 | 0.06-0.012 | 0.06-0.012 | 0.06-0.012 | 0.06-0.012 | 0.06-0.012 |
| 6 | 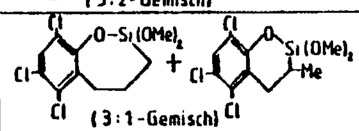 + (3:1-Gemisch) | 0.06-0.012 | 0.06-0.012 | 0.06-0.012 | 0.06-0.012 | 0.06-0.012 | 0.06-0.012 |
| 7 | 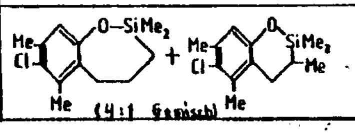 + (4:1 Gemisch) | 0.06-0.012 | 0.06-0.012 | 0.06-0.012 | 0.06-0.012 | 0.06-0.012 | 0.06-0.012 |

**TABELLE II:** Hemmkonzentrationen in % gegenüber Testorganismen in 50 % wäßriger Aceton-Lösung

| Beispiel Nr. | Testsubstanz | Sproßpilze: Candida albicans | Sproßpilze: Aspergiltus niger | Bakterien: Staphylococcus aureus | Bakterien: Escherichia coli | Bakterien: Bakterium subtilis |
|---|---|---|---|---|---|---|
| 8 | 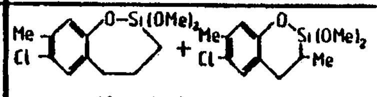 (3:1-Gemisch) | 0,03 - 0,06 | 0,03 - 0,06 | 0,03 - 0,06 | 0,03 - 0,06 | 0,03 - 0,06 |
| 9 | 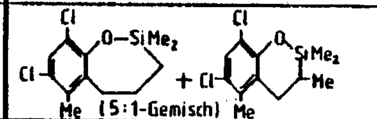 (5:1-Gemisch) | 0,06 - 0,012 | 0,06 - 0,012 | 0,06 - 0,012 | 0,06 - 0,012 | 0,06 - 0,012 |
| 10 | 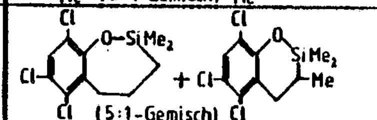 (5:1-Gemisch) | 0,06 - 0,012 | 0,06 - 0,012 | 0,06 - 0,012 | 0,06 - 0,012 | 0,06 - 0,012 |
| 11 | 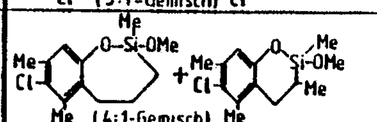 (4:1-Gemisch) | 0,06 - 0,012 | 0,06 - 0,012 | 0,06 - 0,012 | 0,03 - 0,06 | 0,03 - 0,06 |
| 12 | 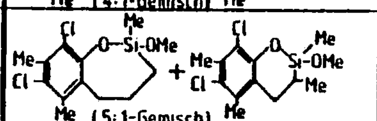 (5:1-Gemisch) | 0,06 - 0,012 | 0,06 - 0,012 | 0,06 - 0,012 | 0,06 - 0,012 | 0,06 - 0,012 |
| 13 | 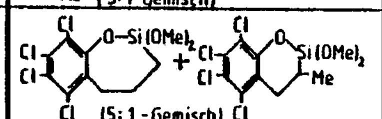 (5:1-Gemisch) | 0,06 - 0,012 | 0,06 - 0,012 | 0,06 - 0,012 | 0,06 - 0,012 | 0,06 - 0,012 |
| 14 | 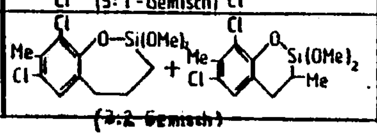 (3:2-Gemisch) | 0,03 - 0,06 | 0,03 - 0,06 | 0,06 - 0,012 | 0,03 - 0,06 | 0,03 - 0,06 |

Beispiele 15 bis 17

Ein ca. 2 : 1-Gemisch aus 1-Oxa-2-sila-2,2-dimethoxy-6,7-(3,5-dimethyl-4-chlorbenzo)-cycloheptan mit dessen -3-methyl-cyclohexan-Isomerem wurde mit jeweils äquimolaren Mengen an 3-Aminopropyltriethoxysilan, 3-N,N-Dimethylaminopropyltrimethoxysilan und Abietinamin in 50 %ig wäßriger Aceton-Lösung

mikrobiologisch auf Hemmkonzentration gegenüber Escherichia coli, Staphylococcus aureus und Aspergillus niger untersucht. Danach wurde mit Aspergillus niger ein Agar-Diffusionstest durchgeführt, indem auf eine Agar-Kultur mit A. niger jeweils 0,1 ml Probelösung der ermittelten Hemmkonzentration zentral aufgetragen und der Kreisdurchmesser der voll entwickelten sichtbaren Hemmzone gemessen wurde. Die Meßergebnisse sind in Tabelle III wiedergegeben.

Beispiel 18

Wirksamkeit gegen Fadenalgen

Einem handelsüblichen Korrosionsschutzlack auf Basis Ethylpolysilikat 40 und Zinkstaub wurden 0,5 Gew.-% eines äquimolaren Gemischs von 3-N,N-Dimethylaminopropyltrimethoxysilan und einem ca. 3 : 2-Gemisch aus 1-Oxa-2-sila-2,2-dimethyl-6,7-(3,4,5,6-tetrachlorbenzo)-cycloheptan mit dessen -2,2,3-trimethyl-5,6-(benzo)-cyclohexan-Isomerem in 40 %iger Lösung in Ethanol beigemischt. Der so ausgerüstete Lack wurde auf 200 x 40 mm große Probestreifen aus Stahlblech aufgetragen und ausgehärtet. Als Vergleich dienten mit nicht ausgerüstetem Lack beschichtete Probebleche. Als Testorganismen wurden hauptsächlich Oedogonium und Spyrogyra enthaltende Aufwuchsgrünalgen-Kulturen verwendet. Nach Lagerzeiten von ca. drei Monaten waren die Kontrollbleche mit Algen bewachsen, während die Tests keinen Algenbewuchs aufwiesen.

**TABELLE III:** Hemmkonzentration in Gew% gegenüber Testorganismen in Gegenwart von Aminoverbindungen und Agar-Diffusionstest. Lösungsmittel ist 50% wäßriges Aceton.

| Beispiel Nr. | Testsubstanz | Amin-Komponente (Äquimolare Menge) | Escherichia coli | Staphylococcus aureus | Aspergillus niger Hemm-Konz | Aspergillus niger Ø Hemmzone (mm) |
|---|---|---|---|---|---|---|
| 15 | 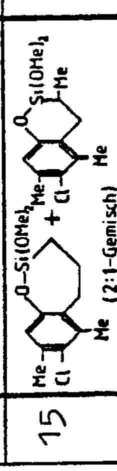 (2:1-Gemisch) | $H_2N(CH_2)_3Si(OEt)_3$ | 0,06–0,012 | 0,06–0,012 | 0,012–0,024 | 44 |
| 16 | 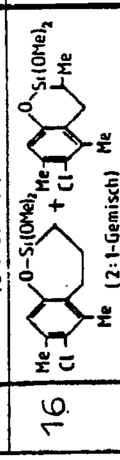 (2:1-Gemisch) | $Me_2N(CH_2)_3Si(OMe)_3$ | 0,06–0,012 | 0,06–0,012 | 0,012–0,024 | 52 |
| 17 | 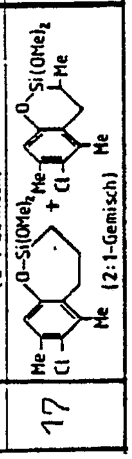 (2:1-Gemisch) | Abietinamin | 0,06–0,012 | 0,06–0,012 | 0,012–0,024 | 49 |

Beispiel 19

Zeitstandversuch

4 cm lange und 0,5 cm breite Streifen aus einem entschlichteten E-Glasfaser-Vlies wurden mit einer 70

%ig wäßrigen Aceton-Lösung, die mit einigen Tropfen Essigsäure auf pH 4 eingestellt war, von 2 Gew.-% eines ca. 2 : 1-Gemischs aus 1-Oxa-2-sila-2,2-dimethoxy-6,7-(3,5-dimethyl-4-chlorbenzo)-cycloheptan mit dessen -3-methyl-cyclohexan-Isomerem imprägniert durch Tauchen und Trocknen bei 120 °C.

Die bakteriologische Prüfung erfolgte an Bacterium subtilis, die Fungiprüfung an Candida albicans. Zum Zweck der Prüfung wurden die Probestreifen 2 Tage lang in sterilen Petrischalen gelagert. Nach Sterilitätsprüfung wurden die Streifen jeweils 15 Minuten lang in je 15 ml Kultursuspensicn bzw. -Lösung getaucht, steril abgetupft, steril in Petrischalen zwischengelagert, nach ca. einem Tag in je 10 ml Nährlösung übertragen und eventuelles Wachstum beobachtet.

Ein Teil der Probestreifen wurde als Kontrolle in Petrischalen verschlossen inert gelagert. Die übrigen Probestreifen wurden zwecks zeitraffender Klimatisierung in einem Frischluftstrom gelagert, dessen Temperatur und relative Luftfeuchte im regelmäßigen, täglichen Wechsel für 16 Stunden auf 40 °C und 50 % und für 8 Stunden auf 20 °C und 70 % eingestellt wurde.

Der Versuch ergab, daß die zeitraffend klimatisierten Probestreifen ihre bactericiden und fungiciden Eigenschaften beibehalten und gegenüber den Kontrollen keinen nennenswerten Unterschied im Ergebnis zeigten.

## Ansprüche

1. Verwendung von cyclischen Phenolorganosilanestern der allgemeinen Fcrmel

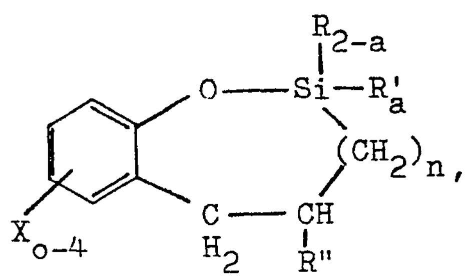

in der X für Halogen- und/oder gegebenenfalls fluorierte Alkylreste mit 1 bis 4 Kohlenstoffatomen, R' für Halogen- oder Alkoxyreste mit 1 bis 4 C-Atomen, R für gleiche oder verschiedene Alkylreste mit 1 bis 4 Kohlenstoffatomen und R'' für $CH_3$, wenn n = 0 oder für H, wenn n = 1 ist, steht und a = 0 oder 1 oder 2 bedeutet, als Mittel gegen biologischen Angriff und/oder biologische Verseuchung und/oder biologischen Besatz, verursacht durch Pilze, Bakterien, Viren, Kleinpflanzen, Insekten und andere Schadorganismen, gegebenenfalls in Kombination mit Aminen und/oder Aminoorganosiliciumverbindungen.

## Claims

1. Use of cyclic phenolorganosilane esters of the general formula

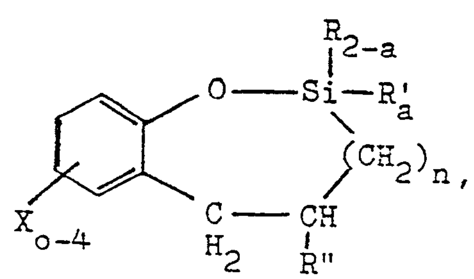

in which X stands for halogen and/or alkyl residues with 1 to 4 carbon atoms which are optionally fluorinated, R' stands for halogen or alkoxy residues with 1 to 4 C-atoms, R stands for the same or

different alkyl residues with 1 to 4 carbon atoms and R" for $CH_3$, if n = 0 or for H, if n = 1, and a denotes 0 or 1 or 2, as agents against biological attack and/or biological contamination and/or biological infestation, originating from fungi, bacteria, viruses, micro plants, insects and other harmful organisms, possibly in combination with amines and/or aminoorganosilicon compounds.

## Revendications

1. Utilisation de phénol-organo-silane-esters cycliques de formule générale :

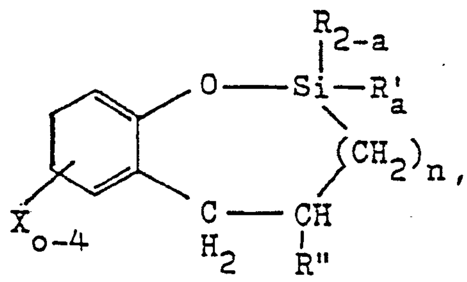

(dans laquelle X représente des restes halogéno et/ou des restes alkyles éventuellement fluorés comportant 1 à 4 atomes de carbone ; R' représente des restes halogéno ou alcoxy comportant 1 à 4 atomes de carbone ; R représente des restes alkyles identiques ou différents ayant 1 à 4 atomes de carbone ; et R" représente $CH_3$, lorsque n est nul ou représente H lorsque n vaut 1 ; et a vaut 0 ou 1 ou 2) comme produit pour lutter contre une attaque biologique et/ou une contamination biologique et/ou une invasion biologique, provoquée par des champignons, des bactéries, des virus, de petits végétaux, des insectes et autres organismes nuisibles, ces esters étant éventuellement utilisés en combinaison avec des amines et/ou avec des composés d'amino-organo-siliciums.